# EUROPÄISCHE PATENTSCHRIFT

(11) **EP 0 898 861 B1**
(45) Veröffentlichungstag und Bekanntmachung des Hinweises auf die Patenterteilung: **12.02.2003**
(21) Anmeldenummer: 98113246.7
(22) Anmeldetag: 16.07.1998
(51) Int. Cl.: A01C 7/08

(54) **Sägerät**
Sowing device
Semoir

(30) Priorität: 18.08.1997 US 912470
(43) Veröffentlichungstag der Anmeldung: 03.03.1999
(73) Patentinhaber: DEERE & COMPANY, Moline, Illinois 61265-8098 (US)
(72) Erfinder: Gregor, David Walter, Davenport, Iowa 52806 (US)
(74) Vertreter: Magin, Ludwig Bernhard

(56) Entgegenhaltungen:
- DE-A- 1 557 967
- DE-U- 8 708 456
- DE-U- 9 102 533
- US-A- 5 379 706

## Beschreibung

Die Erfindung betrifft ein Sägerät mit wenigstens einem Tank, wenigstens einem in einem Meßgehäuse angeordneten Meßsystem und wenigstens einem pneumatischen Verteilersystem, wobei eine Strömungsverbindung einerseits an das Verteilersystem angeschlossen ist und andererseits in den Tank mündet.

Es ist bekannt, Sägeräte mit einem Saatguttank und einem unterhalb von diesem vorgesehenen Verteiler oder einem Meßsystem zu versehen, mit dem in dem Saatguttank gelagertes Saatgut abgemessen und über Schare in den Boden abgegeben wird. Um die Förderung des Saatguts zu unterstützen, wird der Saatguttank unter Druck gesetzt, so daß es nicht nur aufgrund der Schwerkraft aus dem Saatguttank entweicht.

In der DE 1 557 967 A und der DE 91 02 533 U werden pneumatische Sämaschinen vorgeschlagen, bei denen der Tank durch Leitungen mit Druckluft beaufschlagt wird. Die Leitungen entnehmen die Druckluft dem zum Austragen des Saatguts dienenden Luftstrom stromauf des Auslasses des Meßsystems. Die bekannten Leitungen sind aus mechanischen Gründen ungünstig, da sie separate Elemente sind, die leicht beschädigt werden können. Auch stimmt der Luftdruck an der Stelle, an der die Leitungen angesetzt sind, nicht unbedingt mit dem Luftdruck am Auslass des Meßsystems überein.

Das der Erfindung zugrunde liegende Problem wird darin gesehen, daß falsche Druckverhältnisse stromauf- und stromabwärts der Gutaustrittsstelle dazu führen können, daß das auszubringende Gut, also Saatgut oder Dünger oder sonstiges Granulat, entweder zu stark unter Druck gesetzt wird und somit nicht die richtige Menge zugemessen wird, oder daß außerhalb des Saatguttanks ein höherer Druck herrscht als innerhalb, so daß das Gut in seiner Austrittsbewegung gehemmt wird.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird die Luft zum Unterdrucksetzen des oder der Tanks an einer Stelle entnommen, an der im wesentlichen der gleiche Druck herrscht, wie in dem Meßsystem. Demnach herrscht beiderseits der Austrittsstelle des Ausbringguts, das z. B. Saatgut oder Dünger sein kann, im wesentlichen der gleiche Druck, so daß dieses weder aus dem Tank herausgeschleudert noch zu diesem hingedrängt wird. Als Ergebnis tritt ein gleichmäßiger Fluß des Ausbringguts auf.

Bei einem Sägerät mit einem Primärverteiler in der Venturibauweise wird der Eintritt des Ausbringguts in eine Verteilerleitung dadurch beschleunigt, daß an der Eintrittsstelle ein Unterdruck erzeugt und zum Ansaugen benutzt wird. Auf diese Weise wird der Luftstrom dreifach benutzt - zum Fördern des Ausbringguts, zum Ansaugen des Ausbringguts und zum Unter-Druck-Setzen des Tanks. Die Venturidruckplatte stellt die entsprechenden Anschlüsse und Verbindungen her.

Eine in das Meßgehäuse integrierte Luftführung wird geschaffen, wenn dieses einen internen Kanal oder dergleichen für einen Luftdurchlaß enthält, der die entsprechende Verbindung herstellt. Auf diese Weise sind insbesondere außenliegende separate Leitungen entbehrlich.

Die Verwendung eines drehbaren Meßrads stellt eine kontinuierliche und dosierte Förderung des Ausbringgutes sicher und stellt gewissermaßen eine Barriere dar, die den Tank und den Verteiler bzw. den nach dem Meßrad folgenden Bereich voneinander trennt, so daß die Luftdruckverhältnisse beherrschbar sind. Wenn das oder die Meßräder in einem austauschbaren Meßeinsatz angeordnet ist/sind, können ein oder mehrere Meßeinsätze mit bestimmten Zumeßeigenschaft vorbereitet werden, die wahlweise für die jeweiligen Arbeitsbedingungen verwendet werden.

Weitere Teile können eingespart werden, wenn eine ohnehin erforderliche Leiter in dem Tank ganz oder teilweise als Kanal ausgebildet wird, insbesondere, indem einer ihrer Schenkel hohl ist und einenends den abgezweigten Luftstrom aufnimmt und anderenends in dem Tank an einer freien Stelle ausläuft.

Damit unter komplexen Verhältnissen die Druckverhältnisse oberhalb und unterhalb des Ausbringguts nicht verfälscht werden, ist es hilfreich, den Luftstrom vor dem Venturielement abzuzweigen, so daß der Druck im Tank auf dem gewünschten Maß gehalten werden kann.

Zur Aufnahme und Abgabe des Luftstroms sind entsprechende Mündungen in der Venturidruckplatte vorgesehen, die an den Stellen angeordnet werden, an denen eine Verbindung zu dem Luftstrom in dem Venturianschluß geschaffen wird. Durch die Bemessung der Mündungen kann zudem Einfluß auf die Druck- und Strömungsverhältnisse genommen werden.

Da das Sägerät in einer Vielzahl von Varianten ausgebildet werden kann, die es unter Umständen erforderlich machen, daß die Venturianschlüsse mit ihren Verteilerleitungen unterhalb von Nebenanschlüssen angeordnet werden, kann mittels einer oder mehrerer Übertragungsdruckplatten dennoch der Druck im Tank aufgebaut werden, wenn diese eingangsseitig an die Venturidruckplatten und ausgangsseitig wenigstens mittelbar an den Tank angeschlossen werden.

In der Zeichnung sind zwei nachfolgend näher beschriebene Ausführungsbeispiele eines Sägerätes mit einer Vielzahl erfinderischer Einzelheiten dargestellt. Es zeigt:
- Fig. 1: ein erstes erfinderisch ausgestaltetes pneumatisches Sägerät in Seitenansicht von links,
- Fig. 2: das Sägerät aus Figur 1 mit einem nachgezogenen Bodenbearbeitungsgerät,
- Fig. 3: ein Meßsystem in einer Seitenansicht von links,
- Fig. 4: das Meßsystem in einer Seitenansicht von rechts,
- Fig. 5: einen Meßeinsatz in einer Explosivdarstellung,
- Fig. 6: einen Meßeinsatz in Verbindung mit einem Meßgehäuse, wobei sich der Meßeinsatz in einer aus dem Meßgehäuse herausgezogenen Stellung befindet,
- Fig. 7: das Meßsystem und ein Primärverteiler im Vertikalschnitt,
- Fig. 8: eine rechte Endplatte des Meßgehäuses und eine Rührwerkswelle in perspektivischer Darstellung,
- Fig. 9: einen Ausbringguttrenner in perspektivischer Explosivdarstellung,
- Fig. 10: ein Meßrad und ein Blindglied in perspektivischer Darstellung,
- Fig. 11a: einen Verschleißeinsatz in Seitenansicht,
- Fig. 11b: den Verschleißeinsatz in perspektivischer Darstellung,
- Fig. 12a: eine Meßradbürste in Seitenansicht,
- Fig. 12b: die Meßradbürste in perspektivischer Ansicht,
- Fig. 13: eine Luftkammer in perspektivischer Darstellung,
- Fig. 14: einen Primärverteiler in perspektivischer Darstellung,
- Fig. 15: den Primärverteiler nach Figur 14 teilweise in Explosivdarstellung,
- Fig. 16a: eine Anschlußhälfte eines linken Nebenanschlusses in einer perspektivischen Darstellung,
- Fig. 16b: die Anschlußhälfte aus Figur 16a in einer Draufsicht,
- Fig. 16c: die Anschlußhälfte aus Figur 16a in einer Seitenansicht,
- Fig. 16d: die Anschlußhälfte aus Figur 16a in einem Schnitt entlang der Linie 16D-16D in Figur 16 C und in der Blickrichtung der dazugehörigen Pfeile,
- Fig. 17a: eine Anschlußhälfte eines rechten Venturianschlusses in einer perspektivischen Darstellung,
- Fig. 17b: die Anschlußhälfte nach Figur 17a in einer Draufsicht,
- Fig. 17c: die Anschlußhälfte nach Figur 17a in einer Seitenansicht,
- Fig. 18: einen Einstellmechanismus zum Verstellen des Primärverteilers in einer Explosivdarstellung, und
- Fig. 19: ein pneumatisches Sägerät in einer nachgezogenen Bauweise nach einem alternativen Ausführungsbeispiel der Erfindung in Draufsicht.

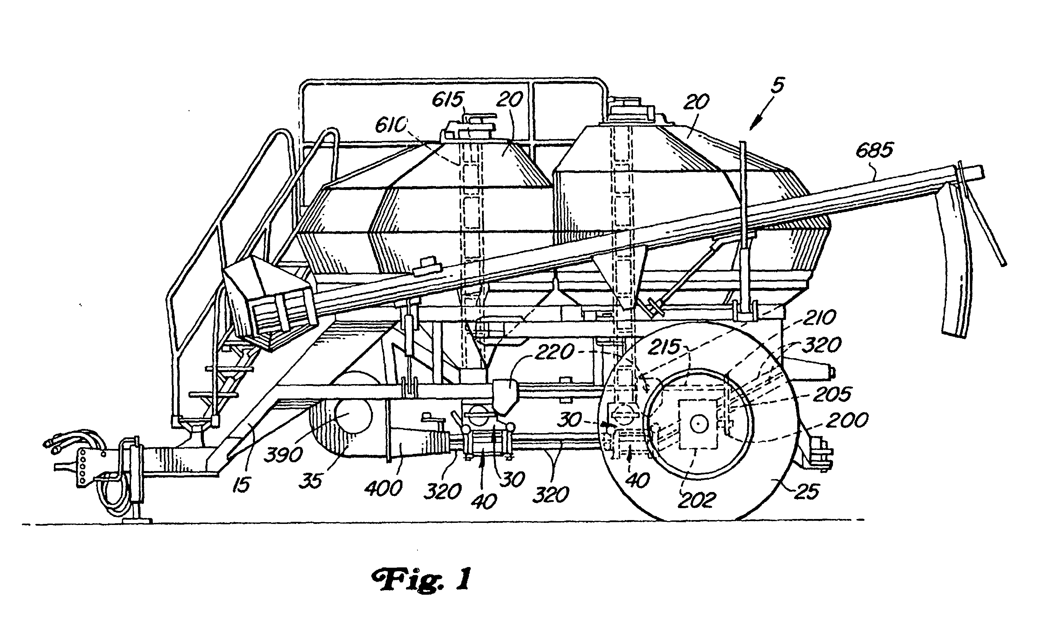

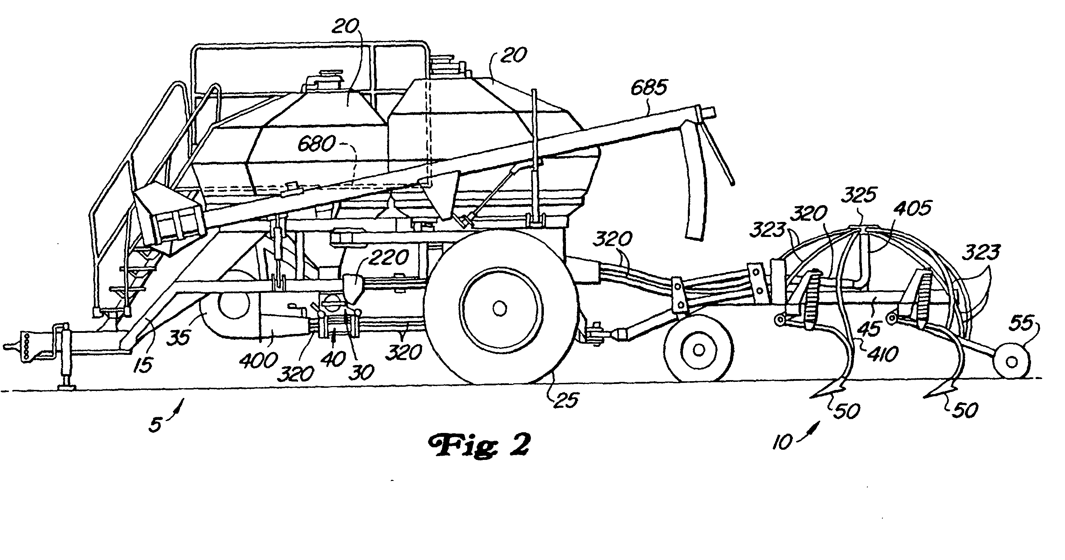

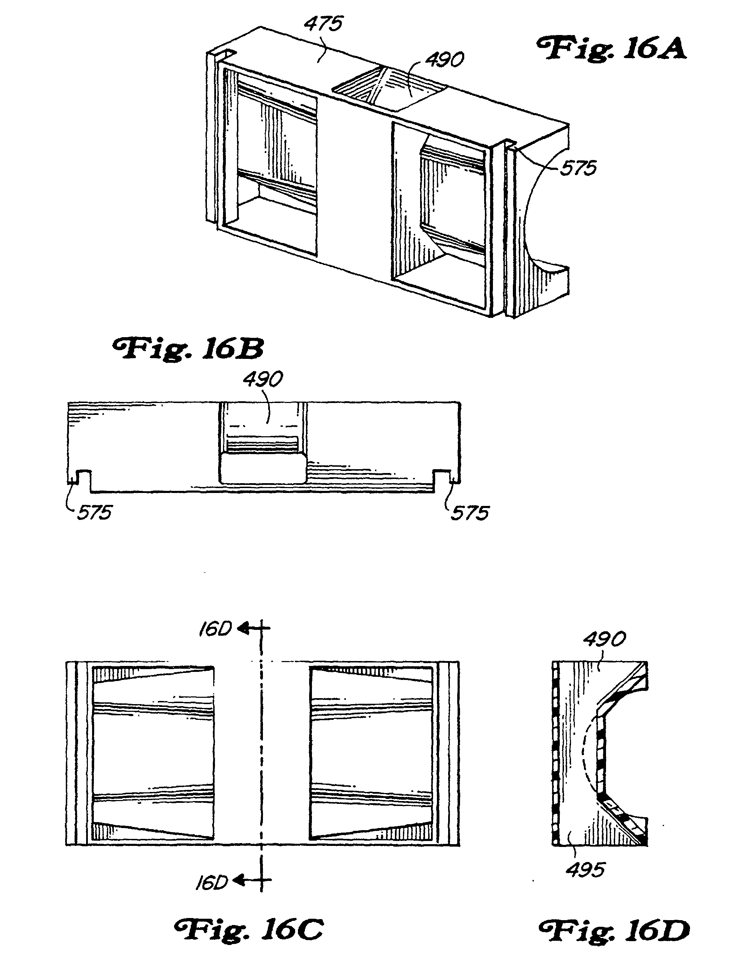

Ein pneumatisches Sägerät nach einem bevorzugten Ausführungsbeispiel der Erfindung ist in den Figuren 1 bis 18 dargestellt. In den Figuren 1 und 2 ist ein pneumatisches Sägerät gezeigt, das einen Ausbringgutwagen 5 enthält, der zwischen einem nicht gezeigten Ackerschlepper und einem Bodenbearbeitungsgerät 10 gezogen wird. Der Ausbringgutwagen 5 weist einen Rahmen 15 auf, an den Tanks 20 und Räder 25 montiert sind. Jedem Tank 20 ist in seinem unteren Abschnitt ein Meßsystem 30 zugeordnet, um an einem Primärverteiler 40 Ausbringgut kontrolliert in ein pneumatisches Verteilersystem 35 einzuspeisen. Das Bodenbearbeitungsgerät 10, das hinter dem Ausbringgutwagen 5 gezogen wird, besteht im allgemeinen aus einem Rahmen 45, an den Furchenöffner bzw. Bodenöffner 50 angebaut sind. Der Einbau von Vorrichtungen zum Schließen der Furche, z. B. in der Art von Verdichtern 55, ist in vielen Anwendungsfällen ebenfalls erwünscht.

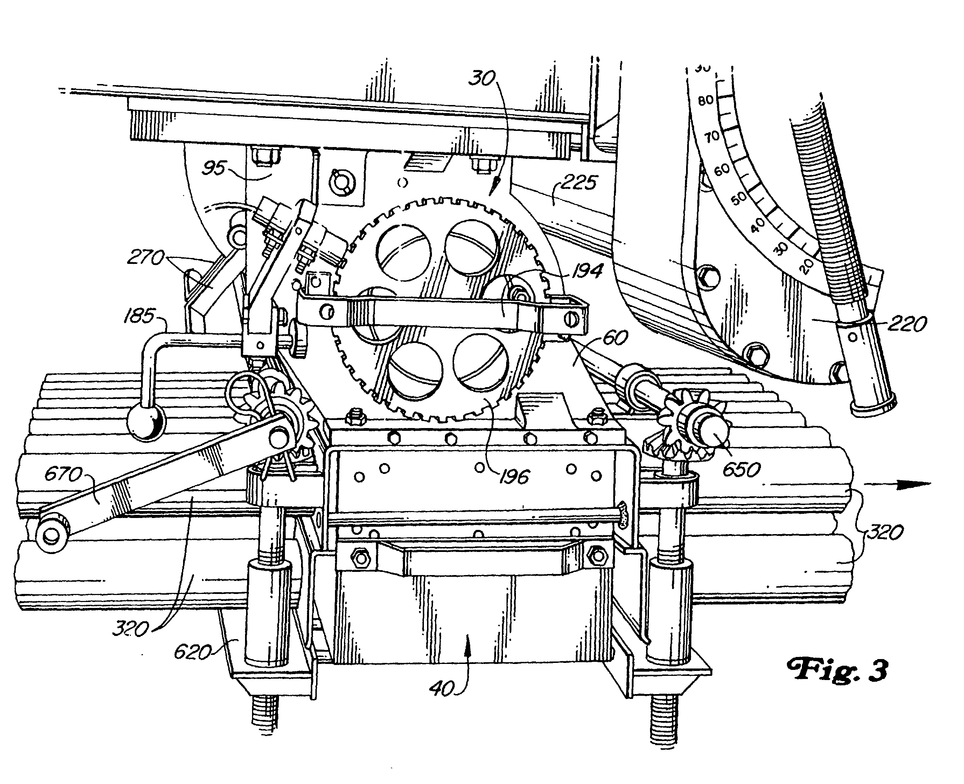

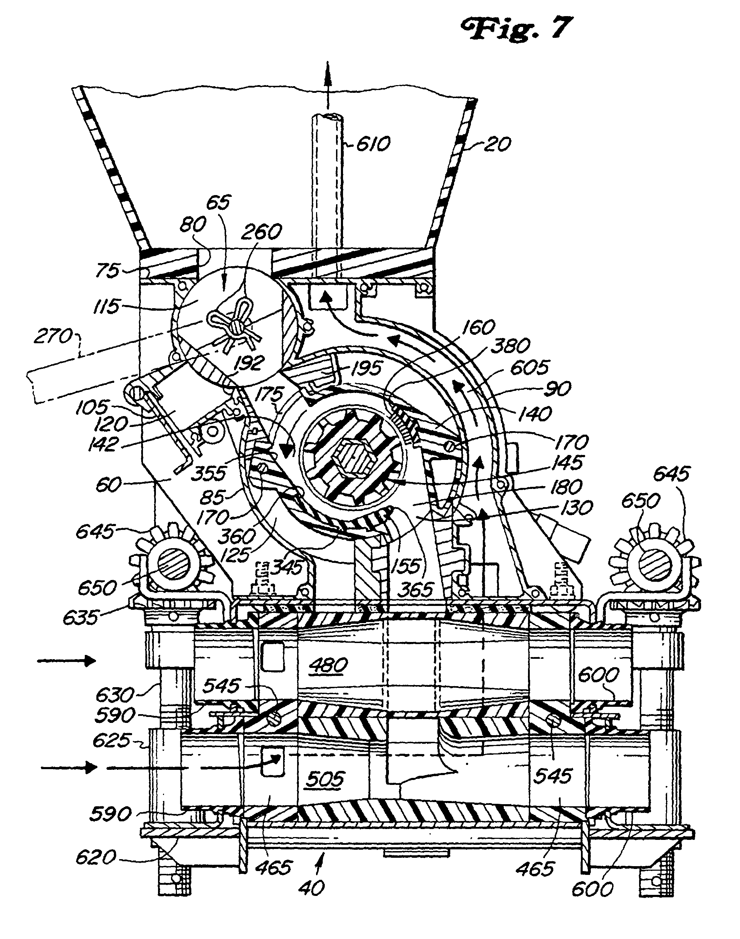

Es wird nun Bezug auf die Figuren 3 bis 7 genommen, in denen ein Meßsystem 30 in einer erfinderischen Ausgestaltung gezeigt ist, das ein Meßgehäuse 60 enthält, das einen Ausbringguttrenner 65 und einen Meßeinsatz 70 enthält. Das Meßgehäuse 60 enthält eine Deckplatte 75 mit einem insbesondere schlitzförmigen Ausbringguteinlaß 80, vordere und rückwärtige Wände 85, 90, linke und rechte Endplatten 95, 100 und eine gelenkig angebrachte Reinigungstür 105 mit einer Türdichtung 107 (Fig. 7) an der vorderen Wand 85. Die linke Endplatte 95 ist mit einer Öffnung 110 zum Austauschen des Meßeinsatzes 70 versehen. Die Deckplatte 75 verbindet die vordere und die rückwärtige Wand 85, 90 und die linke und die rechte Endplatte 95, 100, um eine Ausbringguttrennkammer 115, eine Ausbringguträumkammer 120 und eine Meßkammer 125 mit einem insbesondere schlitzförmigen Ausbringgutauslaß 130 an ihrem unteren Endbereich zu bilden. Vorzugsweise ist für jeden Zweig des Primärverteilers 40 ein Ausbringgutauslaß 130 vorgesehen.

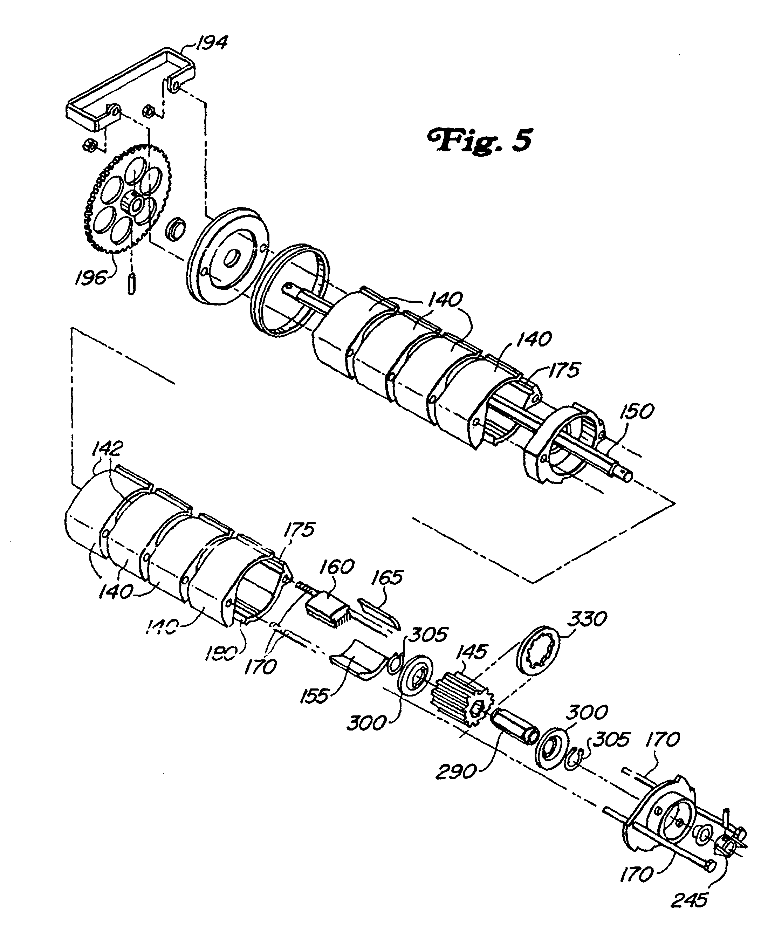

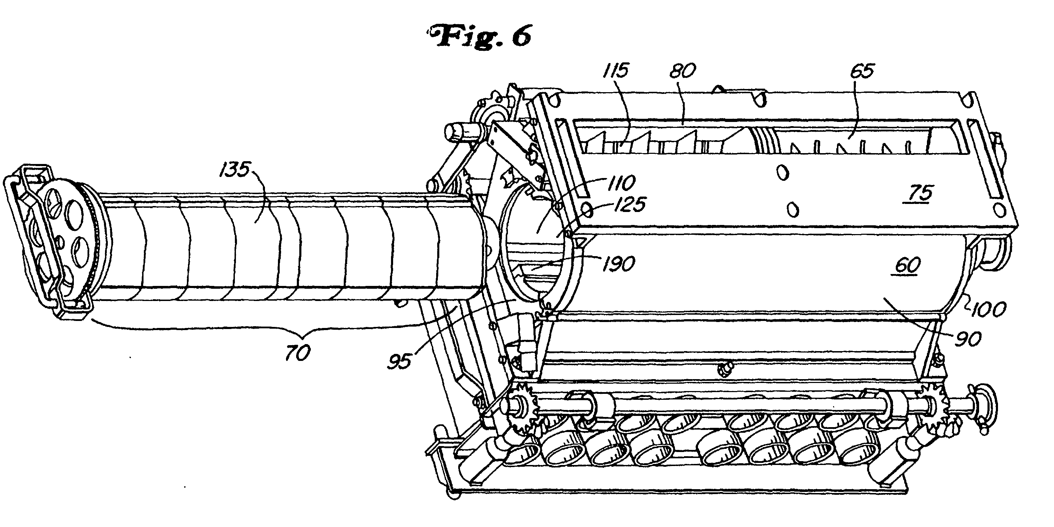

Der Meßeinsatz 70 ist in der Meßkammer 125 untergebracht. In den Figuren 5 und 6 ist ein Meßeinsatz 70 gezeigt, der ein Gehäuse 135 enthält, das eine Vielzahl von Kammerabschnitten 140 und eine Vielzahl von Meßrädern 145 enthält. Vorzugsweise ist für jeden Zweig des Primärverteilers 40 ein Kammerabschnitt 140 und ein Meßrad 145 vorgesehen. Die Meßräder 145 sind in den Kammerabschnitten 140 drehbar montiert und drehen zusammen mit einer Meßantriebswelle 150. Die Kammerabschnitte 140 enthalten jeweils einen Verschleißeinsatz 155, eine Meßradbürste 160 und - wenn sie nicht wirksam sind - einen Türeinsatz 165. Die Kammerabschnitte 140 werden mittels Stangen 170 zusammengehalten, die sich durch die Kammerabschnitte 140 hindurch erstrecken. Jeder Kammerabschnitt 140 ist mit einem Kammereinlaß 175 versehen, um Ausbringgut aufzunehmen, und mit einem Kammerauslaß 180, um Ausbringgut abzugeben. Zusätzlich besitzt jeder Kammerabschnitt 140 eine Wand 142, um jeden Kammerabschnitt 140 von einem benachbarten Kammerabschnitt 140 zu trennen.

Ein Griff 194 ist an ein Ende des Meßeinsatzes 70 angebracht, um eine Bedienungsperson beim Ausbau des Meßeinsatzes 70 zu unterstützen. Der Meßeinsatz 70 ist aus der Meßkammer 125 entnehmbar, indem ein Totpunktnocken 185, der auf das Meßgehäuse 60 montiert ist, losgelassen wird, der Meßeinsatz 70 gedreht wird, um den Meßeinsatz 70 von Dichtungen 190 innerhalb des Meßgehäuses 60 zu lösen, und der Meßeinsatz 70 aus dem Meßgehäuse 60 gezogen wird. Der Meßeinsatz 70 kann dann ausgetauscht oder in eine andere Einstellung gebracht werden, die zu dem Aufbau des Bodenbearbeitungsgeräts 12 und der Art des Ausbringguts paßt, das aus dem Tank 20 abgemessen werden soll. Die Bedienungsperson kann den Meßeinsatz 70 ersetzen, indem der Meßeinsatz 70 in die Meßkammer 125 eingeschoben wird, der Meßeinsatz 70 gedreht wird, bis er einen Einsatzausrichtanschlag 195 in dem Meßgehäuse 60 berührt und der Totpunktnocken 185 eingerückt wird, was die Bedienungsperson in der Drehung des Meßeinsatzes 70 unterstützt und den Meßeinsatz 70 in einer eingerückten Stellung an der Dichtung 190 festlegt.

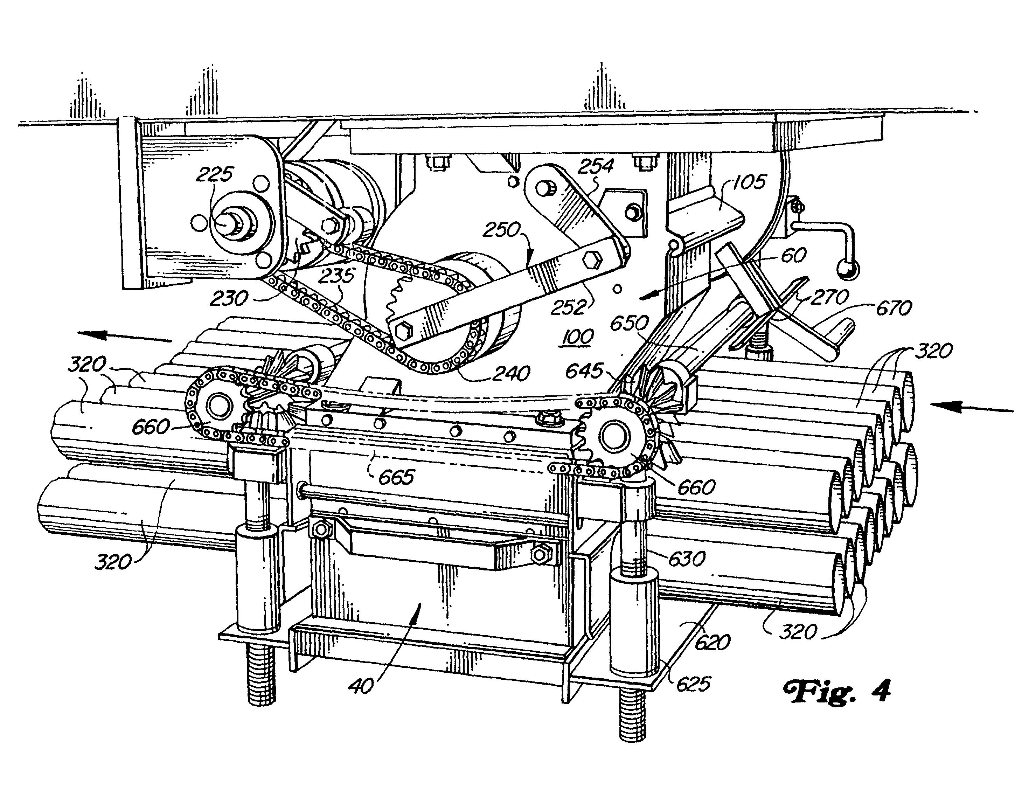

Die Meßsysteme 30 werden vorzugsweise von der Bewegung des Sägeräts über den Boden angetrieben, so daß in jedem Meßsystem 30 im wesentlichen die gleiche Ausbringgutmenge pro gerader Strecke zugeordnet wird, und zwar unabhängig von Änderungen der Geschwindigkeit des Ackerschleppers. Es wird nun Bezug auf Figur 1 genommen, die ein Zahnrad 200 zeigt, das von einem der Räder 25 über ein Winkelgetriebe 202 angetrieben wird und mittels einer Kette 205 an ein Zahnrad 210 der Hauptantriebswelle 215 angeschlossen ist. Das Zahnrad 210 ist ratschenartig an die Hauptantriebswelle 215 angeschlossen, so daß sich die Hauptantriebswelle 215 nur dann dreht, wenn sich das Rad 25 in einer Richtung dreht, die der Vorwärtsfahrtrichtung des Ausbringgutwagens 5 entspricht. Die Hauptantriebswelle 215 ist an ein Übersetzungsgetriebe 220 angeschlossen, das jedem Meßsystem 30 zugeordnet ist. Das Übersetzungsgetriebe 220 ermöglicht es einer Bedienungsperson, das Maß der Umdrehungen einer Querwelle 225 in bezug auf das Maß der Umdrehungen der Hauptantriebswelle 215 (sh. Figur 3) zu verändern. Die von dem Übersetzungsgetriebe 220 angetriebene Querwelle 225 ist wiederum an ein Zahnrad 230 (sh. Figur 4) der Querwelle 225 angeschlossen, das mittels einer Kette 235 an ein Zahnrad 240 des Meßeinsatzes 70 angeschlossen ist. Das Zahnrad 240 ist auf eine kurze Welle 241 montiert, auf deren dem Zahnrad 240 gegenüberliegendem Endbereich ein treibender Kupplungsteil 246 aufgesetzt ist. Der Kupplungsteil 246 und ein getriebener Kupplungsteil 245, die gemeinsam einen Antrieb des Meßsystems 30 sicherstellen, besitzen jeweils ein Paar konisch verlaufender Finger, die sich parallel zu der Drehachse der ihnen jeweils zugeordneten Welle 241, 255 erstrecken, wobei die Finger des einen Kupplungsteils 245 mit den Fingern des anderen Kupplungsteils 246 kämmen. Die Meßantriebswelle 150, die sich durch die Meßräder 145 in dem Meßeinsatz 70 erstreckt, ist über den Kupplungsteil 245 mit dem Kupplungsteil 246 verbunden, was bewirkt, daß sich die Meßräder 145 drehen und das Ausbringgut zumessen, wenn sich der Ausbringgutwagen 5 vorwärts bewegt und sich das Rad 25 dreht.

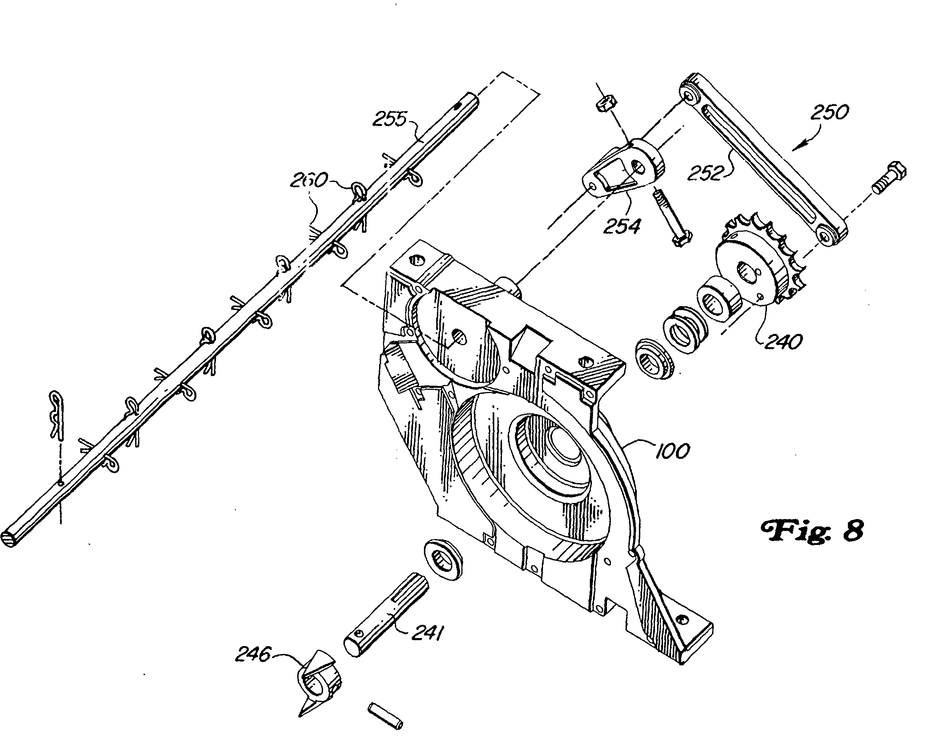

Gemäß Figur 8 ist ein Ende eines Rührwerkantriebs 250, der eine Kurbelstange 252 und eine Kurbel 254 enthält, exzentrisch an das Zahnrad 240 angeschlossen und mit seinem anderen Ende an einer Rührwerkswelle 255 gesichert, was bewirkt, daß die Rührwerkswelle 255 um ihre Achse oszilliert, wenn sich das Zahnrad 240 dreht. Rührstifte 260 erstrecken sich durch die Rührwerkswelle 255 und greifen innerhalb der Ausbringguttrennkammer 115 in das Ausbringgut ein, um zu verhindern, daß das Ausbringgut zusammenbackt und um einen konstanten Ausbringgutfluß zu unterstützen.

Obwohl das bevorzugte Ausführungsbeispiel eine Kombination eines Wellen- und Kettenantriebs bevorzugt, können auch andere bekannte Kraftübertragungsmethoden benutzt werden.

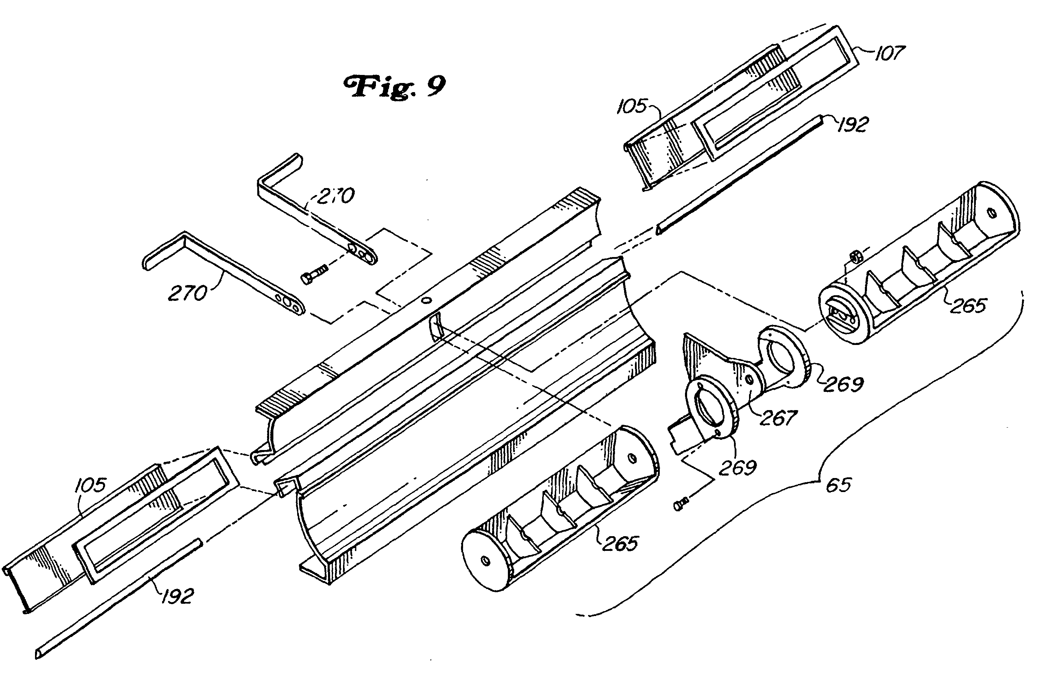

Gemäß den Figuren 6 und 9 ist der Ausbringguttrenner 65 mittels der linken und der rechten Endplatte 95, 100 des Meßgehäuses 60 in der Ausbringguttrennkammer 115 drehfest aufgenommen. Der Ausbringguttrenner 65 enthält ein Paar drehbarer Absperrventile 265 und einen Ausbringguttrenngriff 270, der an jedes drehbare Absperrventil 265 angeschlossen ist. An ihren inneren Endbereichen liegen die Absperrventile 265 an Absperrventillagern 269 an, die in dem Meßgehäuse 60 fest sind. Eine Führung 267 zur Erkennung der Lage des Ausbringguttrenngriffs 270 ist zwischen den Ausbringguttrenngriffen 270 befestigt, damit eine Bedienungsperson leicht erkennen kann, ob sich jeder Ausbringguttrenngriff 270 in seiner Offen- oder Schließstellung befindet. Eine flexible Dichtung 192 ist zwischen der Meßkammer 125 und der Ausbringguträumkammer 120 an das Meßgehäuse 60 angebracht. Die Rührwerkswelle 255 (sh. Figuren 7, 8) erstreckt sich durch die drehbaren Absperrventile 265 entlang der Drehachse der drehenden Absperrventile 265. Durch das Anheben der Ausbringguttrenngriffe 270 sind die drehbaren Absperrventile 265 von einer Offen-Stellung, in der das Ausbringgut in die Meßkammer 125 gelangen kann, in eine Schließstellung schwenkbar, die den Ausbringgutfluß in die Meßkammer 125 abstellt und das Ausbringgut statt dessen zu der Ausbringguträumkammer 120 leitet. Infolgedessen kann eine Bedienungsperson die drehbaren Absperrventile 265 des Ausbringguttrenners 65 in ihre Schließstellung bringen, den Meßeinsatz 70 aus dem Meßgehäuse 60 entfernen und die Meßräder 145 neu konfigurieren, oder den Meßeinsatz 70 durch einen anderen Meßeinsatz 70, der für ein gewünschtes Sävorhaben vorgerichtet ist, ersetzen. Wie es sich aus Figur 7 ergibt, können die Absperrventile 265 auch eine Stellung einnehmen, in der der Ausbringguteinlaß 80 verschlossen ist.

Der Gebrauch zweier drehbarer Absperrventile 265, von denen sich jedes über die halbe Breite des Ausbringguteinlasses 80 des Meßgehäuses 60 erstreckt, ermöglicht es der Bedienungsperson, keine, nur die Hälfte oder alle Meßsysteme 30 oberhalb des Ausbringguttrenners 65 von den Tanks 20 zu trennen. Zusätzliche drehbare Absperrventile 265 können eingefügt werden, um die Trennung kleinerer Abschnitte der Breite des Meßsystems 30 zu ermöglichen. Z. B. könnten in dem vorliegenden Ausführungsbeispiel acht drehbare Absperrventile 265 über der Breite des Meßsystems 30 verwendet werden, wobei jedes Absperrventil 265 für ein Meßrad 145 und einen Zweig des pneumatischen Verteilersystems 35 steht.

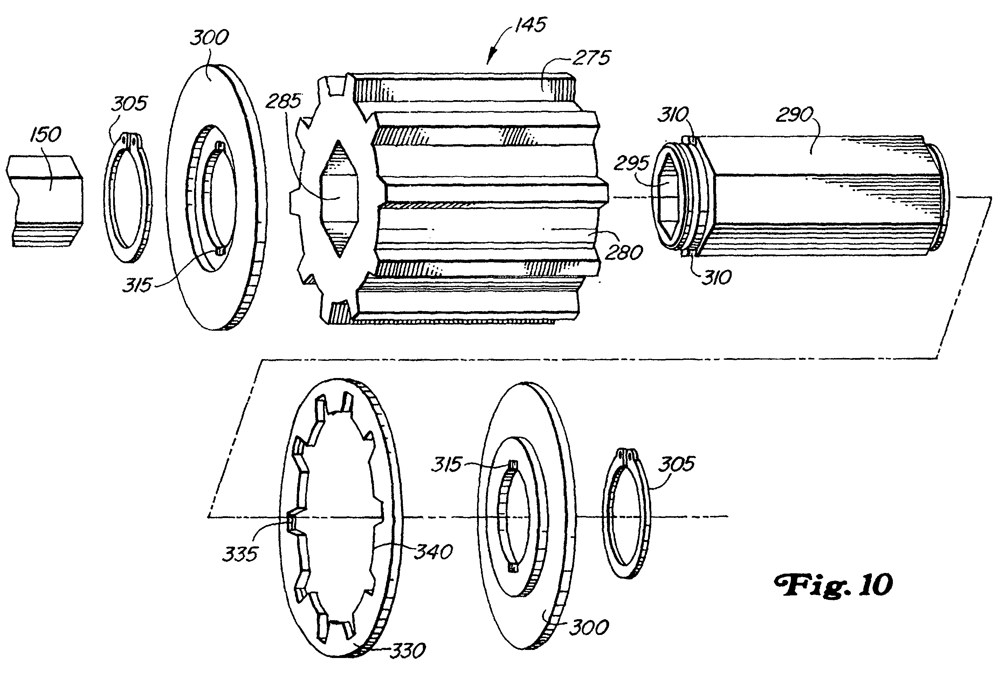

Gemäß Figur 10 ist das Meßrad 145 mit einer Vielzahl von Stegen oder Kämmen 275 versehen, die Ausbringgutaufnahmetäler 280 bilden. Jedes Meßrad 145 hat ein Ausbringgutfördervolumen, das gleich der Summe der Volumina der Ausbringgutaufnahmetäler 280 ist. Außerdem hat jedes Meßrad 145 eine sechskantige Bohrung 285.

Obwohl die Meßräder 145 tatsächlich aus jedem Material hergestellt werden könnten, wird ein Urethan-Kunststoff bevorzugt, und eine Mischung Nr. GC3501 durometer 90R +/- 5 mit Nylon 66 stoßsicher abgewandelt, stellt das bevorzugteste Material für die Meßräder 145 dar. Wenn die Meßräder 145 aus Urethan hergestellt würden, könnte eine Wärmeausdehnung während des Betriebs eine unnötige Reibung und Verschleiß der Komponenten des Meßsystems 30 bewirken. Daher ist vorzugsweise eine axiale Trage- oder Haltewelle 290 mit einem sechskantigen Querschnitt vorgesehen, dessen Außenfläche und -form der der sechskantigen Bohrung 285 der Meßräder 145 entspricht. Die axial verlaufende Haltewelle 290 ist aus einem Material mit einem Wärmeausdehnungskoeffizienten gebildet, der geringer ist als der des Meßrads 145. Vorzugsweise ist die Haltewelle 290 aus einem Material mit der Bezeichnung GC3280 80 D +/-5 mit einem Anteil an Glas, Mineralien und Polyester-Polyurethan von insgesamt 40 % gebildet. Die axial verlaufende Haltewelle 290 weist eine sechskantige Bohrung 295 zur Aufnahme der Meßantriebswelle 150 auf. Die Haltewelle 290 erstreckt sich durch die Meßräder 145 und ist an ihren Endbereichen mit Lagerplatten 300 versehen, die an einem Meßrad 145 anliegen und mittels eines Sicherungsrings 305 auf der Haltewelle 290 gesichert sind. Die Haltewelle 290 ist vorzugsweise mit Nasen 310 für den Eingriff mit den Lagerplatten 300 versehen, die sich in entsprechende Nuten 315 in den Lagerplatten 300 erstrecken, so daß jede Lagerplatte 300 mit dem Meßrad 145 dreht, an dem es anliegt, was Hitze und Verschleiß, die durch Reibung verursacht würden, vermeidet. Der Kammerabschnitt 140, der an der Lagerplatte 300 gegenüber des Meßrads 145 anliegt und nicht mit der Lagerplatte 300 rotiert, sollte aus einem Material gebildet werden, das einen geringen Wärmekoeffizienten und gute Verschleißeigenschaften aufweist, vorzugsweise GC3240 121 R +/-5 mit einem Gesamtanteil an Glas, Mineralien und mit Zusatz von wärmestabilisierendem Nylon 6 von 40 %.

Um die Menge des von den Meßrädern 145 abzumessenden Ausbringguts zu reduzieren, und damit auch die Menge des Ausbringguts, das von Verteilerleitungen 320 einem stromabwärts gelegenen Sekundärverteiler 325 auf dem Bodenbearbeitungsgerät 10 zugeführt wird, kann dem Meßrad 145 ein Blindglied 330 hinzugefügt werden. Gemäß Figur 10 kann das Blindglied 330 auf dem Meßrad 145 angeordnet werden, um einen Bereich der Ausbringgutaufnahmetäler 280 des Meßrads 145 zu belegen. Das Blindglied 330 wird axial auf das Meßrad 145 bis zur Mitte des Meßrades 145 geschoben, um einen optimalen Ausbringgutfluß zu erzeugen. Vorzugsweise erstrecken sich Haltenasen 335 von einer Innenfläche 340 des Blindglieds 330 radial nach innen, um in das Meßrad 145 einzugreifen und um eine zusätzliche Reibung zu besorgen, die das Blindglied 330 davon abhält, sich axial entlang des Meßrades 145 zu bewegen, nachdem das Blindglied 330 positioniert worden ist. Es können Blindglieder 330 verschiedener Größen benutzt werden, was von dem zu belegenden Bereich abhängt. Vorzugsweise entspricht der Querschnitt des Blindglieds 330 aber dem des Meßrades 145, wobei die Meßräder 145 sich ändernde Querschnitte und Ausbringgutfördervolumina aufweisen, die im allgemeinen nach der Art des abzumessenden Ausbringguts ausgesucht werden.

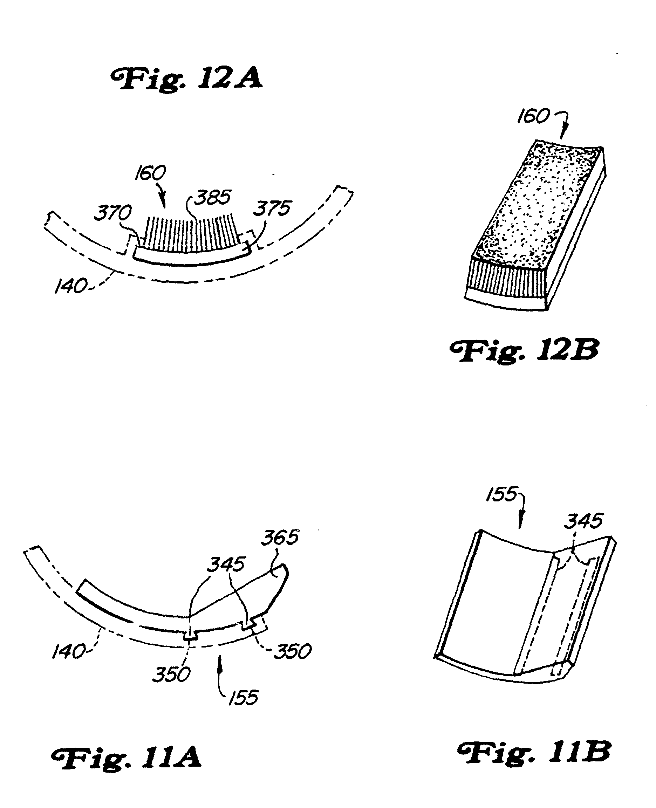

Gemäß den Figuren 7, 11a und 11b sind die Verschleißeinsätze 155 in jedem Kammerabschnitt 140 unterhalb des Meßrades 145 befestigt. Der Verschleißeinsatz 155 enthält Vorsprünge 345, die in entsprechende schwalbenschwanzförmige Nuten 350 in einer inneren Wand 355 des Kammerabschnitts 140 eingreifen, um einen Reibschluß innerhalb des Kammerabschnitts 140 herbeizuführen. Der Kammerabschnitt 140 ist vorzugsweise mit einer Stufe 360 des Verschleißeinsatzes 155 versehen, so daß das Ausbringgut leichter an der Wand 355 des Kammerabschnitts 140 entlang über den Verschleißeinsatz 155 und durch den Kammerauslaß 180 fließen kann. Die Dicke des Verschleißeinsatzes 155 kann geändert werden, um den Abstand zwischen dem Verschleißeinsatz 155 und dem Meßrad 145 zu beeinflussen, was sich wiederum auf die Menge des Ausbringguts auswirkt, das von dem Meßsystem 30 abgemessen wird. Der Verschleißeinsatz 155 besitzt eine Lippe 365, die sich teilweise über den Kammerauslaß 180 erstreckt, so daß ansteigende Luft von dem Ausbringgut weg- und der Meßradbürste 160 zugeleitet wird. Der Verschleißeinsatz 155 kann entfernt und bei Verschleiß oder wenn die Bedienungsperson es zum Erreichen anderer Eigenschaften der Meßsysteme 30 wünscht, ersetzt werden.

Gemäß den Figuren 7, 12a und 12b ist die Meßradbürste 160 in jeden Kammerabschnitt 140 montiert, und erstreckt sich zwischen der inneren Wand 355 des Kammerabschnitts 140 und dem Meßrad 145. Die Meßradbürste 160 ist lösbar an dem Kammerabschnitt 140 befestigt, indem die Meßradbürste 160 in den Kammerabschnitt 140 eingeschoben wird, so daß L-förmige Laschen 380 in den Kammerabschnitten 140 eine Oberseite 370 eines Bodens 375 der Meßradbürste 160 erfassen. Die Meßradbürste 160 besitzt eine Vielzahl von Borsten 385, die sich von dem Boden 375 weg erstrecken, um somit eine Barriere zu schaffen, an der die Luft, nicht aber das Ausbringgut vorbeigelangen kann. Die Borsten 385 haben vorzugsweise unterschiedliche Abstreifwinkel, die mit 5 - 10 Grad auf jeder Seite beginnen und konvergieren. Die Meßradbürsten 160 erhöhen die Zumeßgenauigkeit, indem sie den Fluß von Ausbringgut nach oben durch den Meßeinsatz 70 verhindern, wozu es neigen würde, wenn der Luftdruck in dem Tank 20 darüber zu gering ist.

Das pneumatische Verteilersystem 35 enthält ein Zentrifugalgebläse 390, das an eine Luftkammer 400 angeschlossen ist, die selbst mittels der Verteilerleitungen 320 an einen oder mehrere Primärverteiler 40 angeschlossen ist, von denen jeder einem Tank 20 zugeordnet ist. Die Primärverteiler 40 sind mittels Verteilerleitungen 320 an ein Anstiegsrohr 405 mit einer Senke angeschlossen, das an ein oder mehrere Sekundärverteiler 325 angeschlossen ist. Verteilerleitungen 323 schließen die Sekundärverteiler 325 an Säschare 410 an, die auf den Bodenöffnern 50 befestigt sind.

Das pneumatische Verteilersystem 35 ist so gezeigt, daß es zwei Reihen von Verteilerleitungen 320 und Anschlüssen in dem Primärverteiler 40 besitzt, die für separate Luftströme stehen, so daß das Ausbringgut von getrennten Tanks 20 nicht vermischt wird, wenn es pneumatisch von den Tanks 20 zu der Aussaat gebracht wird. Diese Anordnung wird herkömmlicherweise als "Double Shoot", bezeichnet, was Zweifachabgabe bedeutet. Alternativ kann das pneumatische Verteilersystem 35 zur Lieferung nur eines Luftstroms ausgebildet werden, wo nur ein Tank 20 vorgesehen ist oder Ausbringgut aus verschiedenen Tanks 20 miteinander vermischt wird, wenn es ausgebracht wird. Eine solche Anordnung wird dann als "Single Shoot" bezeichnet, was eine Einfachabgabe bedeutet. Die Einfachabgabe würde nur die Hälfte der Verteilerleitungen 320 und Sekundärverteiler 325 und auch nur eine Reihe von Anschlüssen an dem(n) Primärverteiler(n) 40 erfordern.

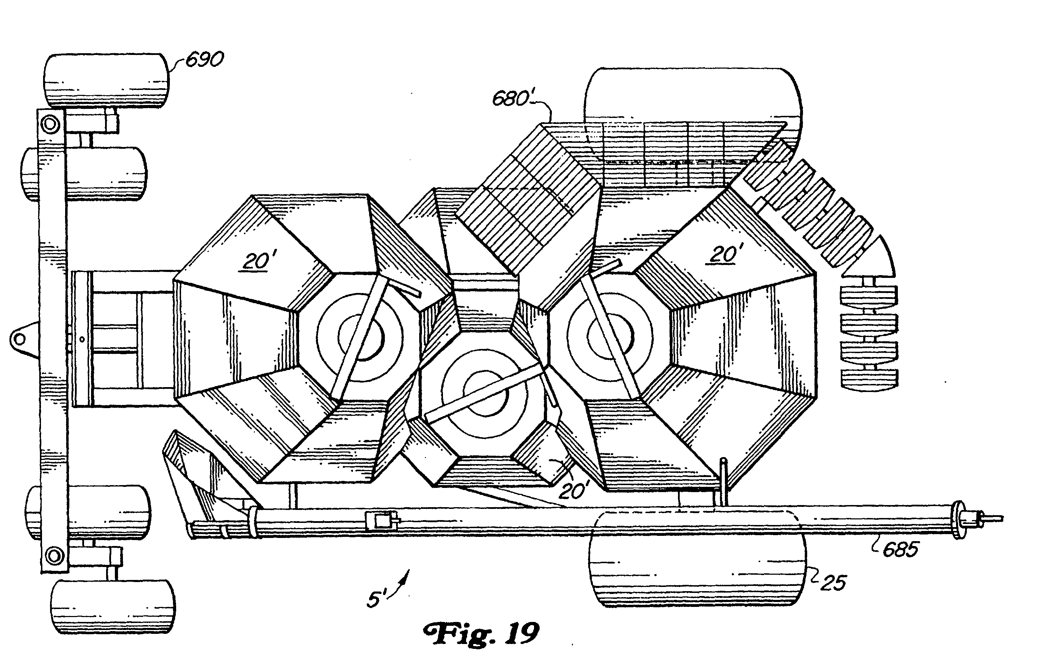

Das pneumatische Sägerät kann auch an eine "Triple Shoot" Ausbildung angepaßt werden, indem ein weiterer Tank 20 - sh. Figur 19 - und ein weiterer Luftstrom hinzugefügt wird; hinzu käme ein zusätzlicher Satz an Verteilerleitungen 320', Sekundärverteilern 325 und Säscharen 410, sowie eine weitere Reihe von Anschlüssen in dem Primärverteiler 40.

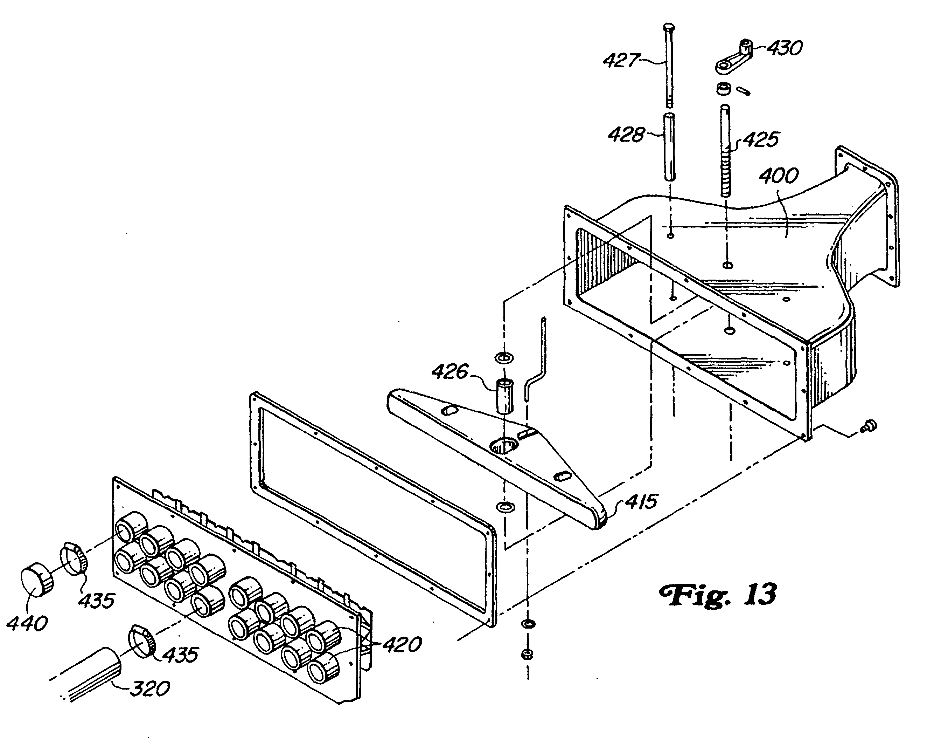

Um gemäß Figur 13 zwei im allgemeinen unabhängige Luftströme in der Zweifachabgabebauweise zu erzeugen, wird Luft von dem Zentrifugalgebläse 390 durch die Luftkammer 400 geleitet, wo eine Klappe 415 der Luftkammer 400 einen gewünschten Anteil an Luft an obere und untere Reihen von Auslaßanschlüssen 420 liefert, so daß durch jeden Auslaßanschluß 420 einer Reihe im wesentlichen die gleiche Menge Luft hindurchströmt. Die Klappe 415 ist in der Luftkammer 400 mittels einer mit Gewinde versehenen Welle 425 in der Luftkammer 400 befestigt, die durch eine mit Innengewinde versehene Hülse 426 geschraubt ist, die in der Klappe 415 befestigt ist. Eine Kurbelwelle 430 der Klappe 415 ist an die Welle 425 angeschlossen, so daß die Welle 425 gedreht und die Klappe 415 angehoben oder abgesenkt werden kann, um die gewünschte Luftmenge jeder Reihe der Auslaßanschlüsse 420 zuzuführen, wenn die Kurbelwelle 430 gedreht wird. Eine Führungsstange 427 und eine Hülse 428 für die Klappe 415 in der Luftkammer 400 erstrecken sich durch die Klappe 415, um zu verhindern, daß sich die Klappe 415 dreht, wenn sie angehoben oder abgesenkt wird.

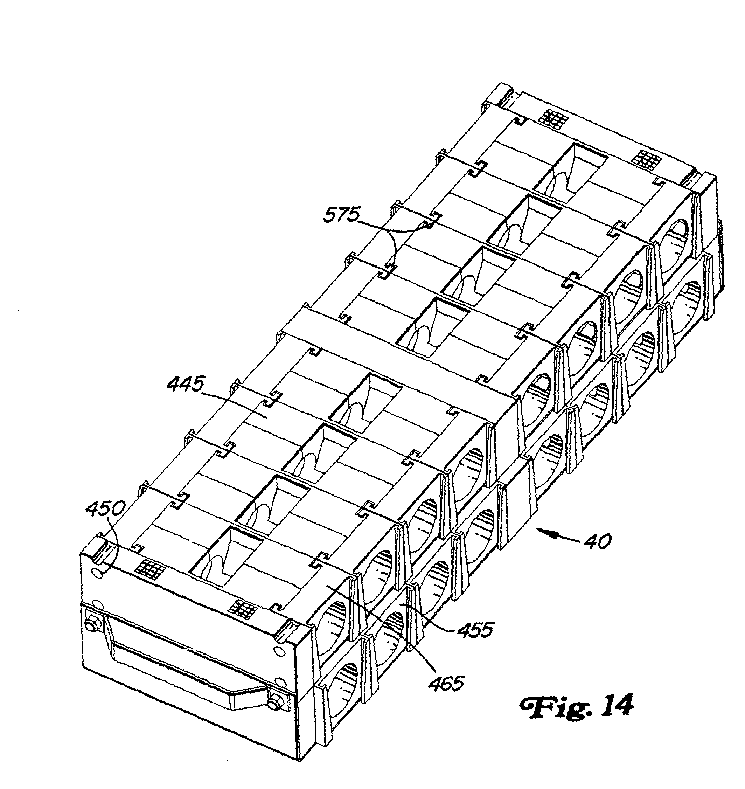

Jede Spalte von Auslaßanschlüssen 420 der Luftkammer 400 und die ihr zugeordneten Verteilerleitungen 320 stellen einen Zweig dar und entsprechen einer Ablage von Ausbringgut auf einem besonderen Breitenbereich der Aussaat. Jeweils eine Verteilerleitung 320 ist im Betrieb mittels einer Schlauchklemme 435 an einen Auslaßanschluß 420 angeschlossen. Auslaßanschlüsse 420 für Zweige, die nicht gebraucht werden, werden mittels Kappen 440 geschlossen. Das in der Zeichnung dargestellte Sägerät entspricht einer 8-Zweig-Zweifachabgabe-Bauweise. Gemäß den Figuren 14 bis 15 sind die Primärverteiler 40 in der 8-Zweig-Zweifachabgabe-Bauweise aus acht Spalten und zwei Reihen von Auslaßanschlüssen 420 gebildet, von denen eine Reihe acht Venturianschlüsse 445 und eine Venturidruckplatte 450 an jedem Ende der Reihe besitzt. Eine andere Reihe besitzt acht Nebenanschlüsse 455 und eine Übertragungsdruckplatte 460 an jedem Ende der Reihe. Verteilerdüsen 465 sind vor jedem Venturianschluß 445 und jedem Nebenanschluß 455 angeordnet.

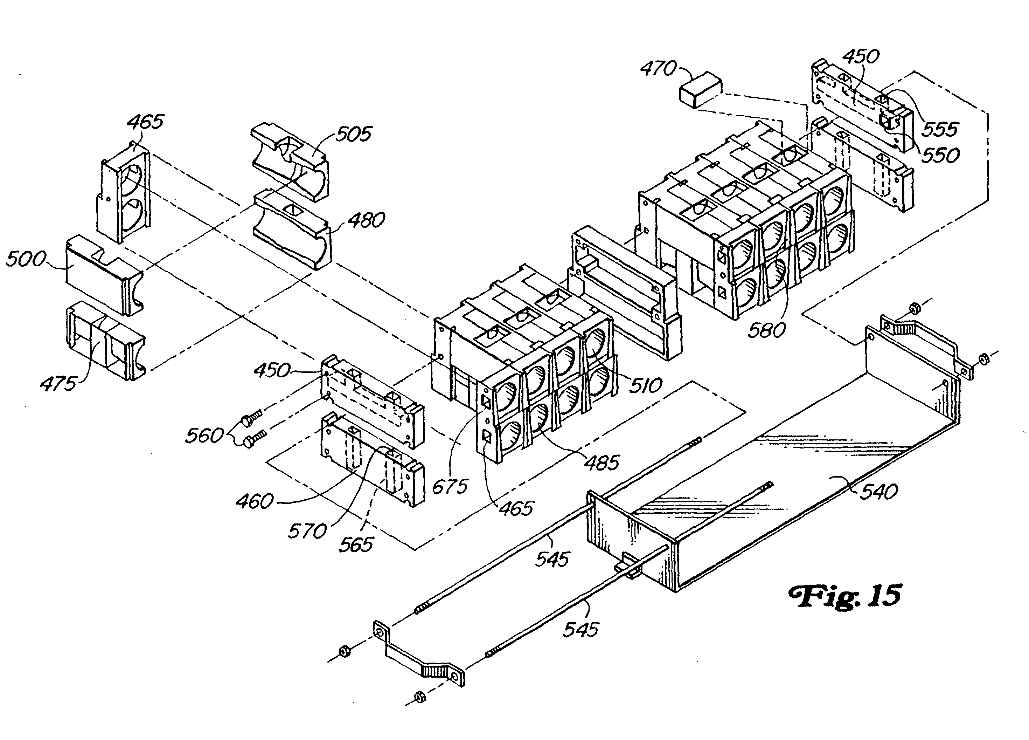

Ein Deckel 470 kann dazu benutzt werden, den Zutritt von Ausbringgut zu einem der Venturianschlüsse 445 oder einem der Nebenanschlüsse 455 gelangen zu lassen, wenn der diesen zugeordnete Zweig nicht benutzt wird. Es wird darauf hingewiesen, daß die Anordnung der Venturi- und Nebenanschlüsse 445 und 455 in den Figuren 14 und 15 eine andere ist als in Figur 7; auf diese Weise wird gezeigt, daß sowohl die Venturianschlüsse 445 als auch die Nebenanschlüsse 455 oben bzw. unten gemäß der Erfindung angeordnet werden können.

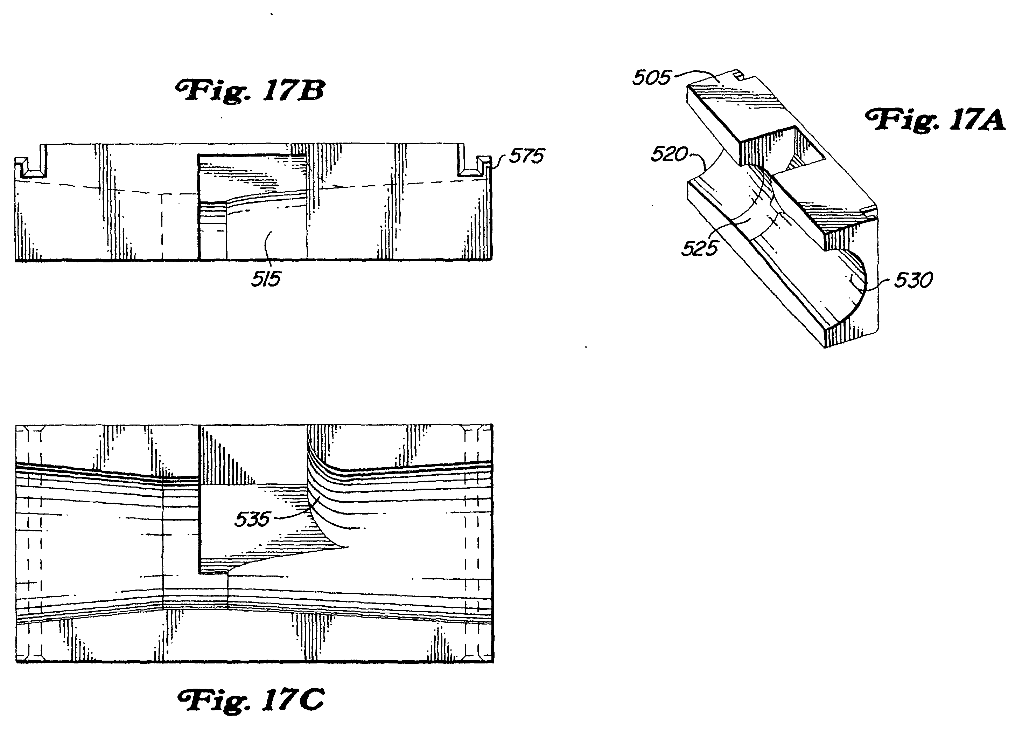

Gemäß den Figuren 15 - 16d sind die Nebenanschlüsse 455 aus linken und rechten Anschlußhälften 475, 480 gebildet. Die linken und rechten Anschlußhälften 475, 480 sind identisch gegossene Teile, die einander gegenüber angeordnet sind, um einen Nebenanschluß 455 zu bilden, der einen Ausbringgutdurchgang 485, einen Nebeneinlaß 490 und einen Nebenauslaß 495 enthält. Gemäß den Figuren 15, 17a-17c sind die Venturianschlüsse 445 aus linken und rechten Anschlußhälften 500 und 505 gebildet, die spiegelbildlich zueinander ausgebildet und aneinander angelegt sind, um den Venturianschluß 445 zu bilden, der einen Luftdurchgang 510 und einen Ausbringguteinlaß 515 besitzt. Der Luftdurchgang 510 in dem Venturianschluß 445 verengt sich vorzugsweise von einem Hauptventurilufteinlaß 520 mit einem Durchmesser von 6,35 cm auf einen Durchmesser von 5 cm an einem Venturielement 525 unterhalb des Ausbringguteinlasses 515, um einen gewünschten Druckabfall für einen optimalen Ausbringgutfluß von dem Meßgehäuse 60 in den Primärverteiler 40 zu besorgen. Stromabwärts des Ausbringguteinlasses 515 erweitert sich der Luftdurchgang 510 von 5 cm zu dem 6,35 cm Durchmesser an einem Hauptventuriausgangsanschluß 530. Eine abgerundete Kante 535 an der stromabwärts gelegenen Seite des Ausbringguteinlasses 515 verbessert den Ausbringgutstrom und reduziert Beschädigungen des Ausbringguts, wenn es in den Venturianschluß 445 eintritt.

Reihen der Nebenanschlüsse 455 und der Venturianschlüsse 445 werden zusammengehalten und auf einer Verteilertragplatte 540 mittels eines Paars von Verteilerstangen 545 angeordnet, die sich durch die Verteilerdüsen 465 erstrecken.

Die Venturidruckplatten 450 besitzen venturidüsenseitig eine Mündung 550 und meßsystemseitig eine Mündung 555 und sind mittels Schrauben 560 an den Enden der Reihen der Venturianschlüsse 445 festgelegt. Die Übertragungsdruckplatten 460 besitzen eine untere Übertragungsmündung 565 und eine obere Übertragungsmündung 570 und sind in gleicher Weise mittels Schrauben an jedes Ende einer Reihe der Nebenanschlüsse 455 angeschlossen.

Die linken und rechten Anschlußhälften 475, 480 werden von Verbindungslaschen 575 auf den linken und rechten Anschlußhälften 475, 480 und auf der Verteilerdüse 465, die über die linke und rechte Anschlußhälfte 475, 480 geschoben wird, zusammengehalten. Die Verteilerdüsen 465 in der Zweifachabgabe-Bauweise sind zwei Reihen hoch und greifen in der gleichen Weise in die Verbindungslaschen 575 auf den linken und rechten Anschlußhälften 500, 505 auf der Reihe des Primärverteilers 40 an, der aus den Venturianschlüssen 445 gebildet ist.

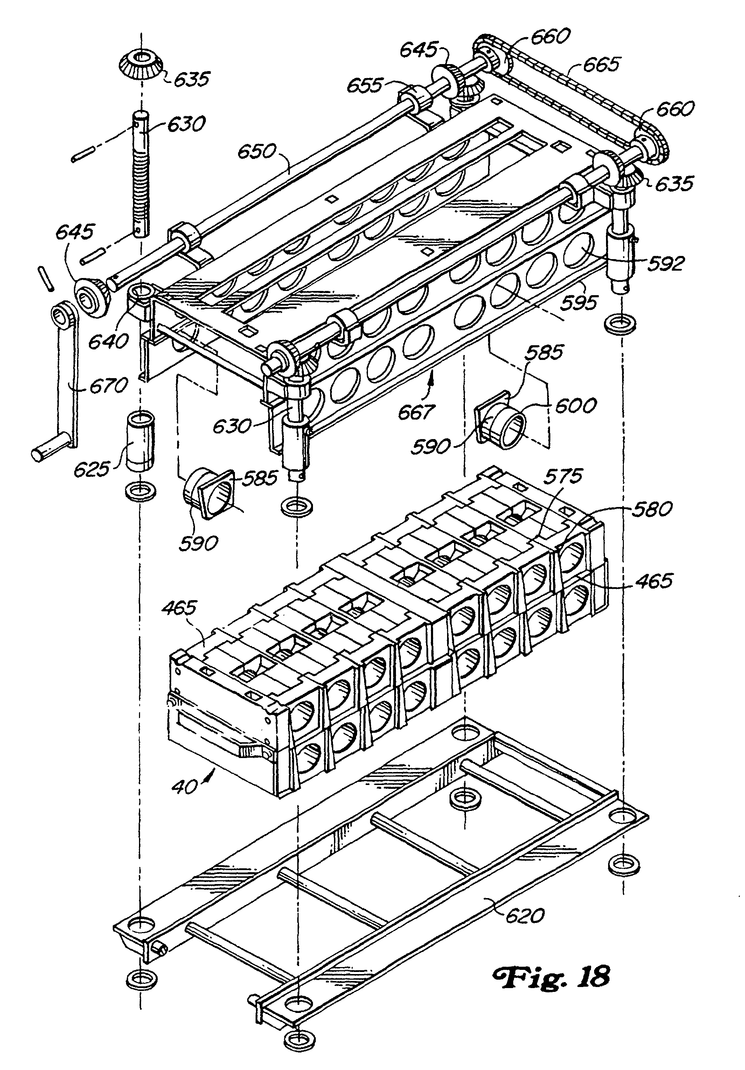

Gemäß den Figuren 15 und 18 ist auf jeder Seite der Verteilerdüsen 465 gegenüber den Verbindungslaschen 575 ein konisch verlaufender Schlitz 580 vorgesehen, der zur Aufnahme einer Stirnseite 585 einer Verteilerdüsendichtung 590 bestimmt ist. In der Zweifachabgabebauweise sind zwei Reihen konisch verlaufender Schlitze 580 vorgesehen, die versetzt sind (Figuren 7, 14, 15 und 18). Die Verteilerdüsendichtungen 590 erstrecken sich durch Öffnungen 592 in einem Verteilerrohrhalter 595, der an dem Rahmen 15 angebracht ist, und sind an ihrer Rohrseite 600 an die Verteilerleitungen 320 angeschlossen.

Vorzugsweise sind in verschiedenen Drosseln bzw. Mündungen in den Übertragungsdruckplatten 460, in den Venturidruckplatten 450 und in den Verteilerdüsen 465 Siebe vorgesehen, um den Eintritt von Ausbringgut zu vermeiden.

Jeder Tank 20 wird mittels des Zentrifugalgebläses 390 mit Luft unter Druck gesetzt. Das Meßgehäuse 60 ist mit einem in Figur 7 gezeigten Luftdurchlaß 605 versehen, um Druckluft von dem Luftstrom in dem Primärverteiler 40 stromaufwärts des Venturielements 525 zu hohlen Schenkeln 610 einer in den Figuren 1 und 7 gezeigten Leiter 615 in den Tank 20 zu leiten, die selbst wiederum die Druckluft zu dem Tank 20 oberhalb des Meßgehäuses 60 leiten. Dies führt zu einem im wesentlichen gleichen Druck oberhalb und unterhalb des Ausbringguts, was das Ausbringgut dazu drängt, in den darunterliegenden Luftstrom des Verteilersystems 35 einzutreten. Jedoch muß der Tank 20 während des Betriebs ordentlich abgedichtet sein, um eine gute Ausbringgutförderung sicherzustellen und Schwingungen zu vermeiden, was eine ungewünschte Bedingung darstellen würde, in der Ausbringgut in getrennten Ladungen gefördert wird, anstatt in einem kontinuierlichen Fluß.

Gemäß Figur 18 ist der Primärverteiler 40 auf einem rechteckigen Verteilertragrahmen 620 vorgesehen. An jeder Ecke des Verteilertragrahmens 620 ist ein mit Innengewinde versehener Zylinder 625 vorgesehen. Eine mit Gewinde versehene vertikale Verteilereinstellwelle 630 mit einem Kegelzahnrad 635 an ihrem oberen Ende ist durch jeden Zylinder 625 geschraubt und erstreckt sich durch vertikale Hülsen 640, die an den Verteilerrohrhalter 595 angebracht sind. Die vier Kegelzahnräder 635 greifen jeweils in eines von vier weiteren Kegelzahnrädern 645 ein. Die weiteren Kegelzahnräder 645 sind an sich gegenüberliegenden Seiten von zwei Querwellen 650 zum Einstellen des Primärverteilers 40 befestigt. Die Querwellen 650 erstrecken sich durch Querbüchsen 655, die an dem Verteilerrohrhalter 595 angebracht sind, und sind ebenfalls jeweils mit einem rückwärtigen Zahnrad 660 versehen, das an das Ende der Querwellen 650 angebracht ist. Die beiden rückwärtigen Zahnräder 660 sind mittels einer Kette 665 verbunden, und eine Verteilereinstellkurbel 670 ist an einem Ende der Querwellen 650 gegenüber dem Zahnrad 660 befestigt.

Wenn die Verteilereinstellkurbel 670 gedreht wird, drehen auch die Querwellen 650, an die die Verteilereinstellkurbel 670 angeschlossen ist, und die Kegelzahnräder 635, 645, die rückwärtigen Zahnräder 660 und die Kette 665 bilden einen Verteilereinstellmechanismus 667, der eine im wesentlichen gleichmäßige Drehung der vertikalen Verteilereinstellwellen 630 erzeugt, was bewirkt, daß der Primärverteiler 40 und der Verteilertragrahmen 620 gleichmäßig angehoben oder abgesenkt wird. Während des Betriebs wird der Primärverteiler 40 in seiner vollkommen angehobenen und eingerückten Stellung gehalten. Wenn der Primärverteiler 40 aus seiner eingerückten Stellung abgesenkt wird, gleiten die Verteilerdüsen 465 aus der Berührung mit den Verteilerdüsendichtungen 590, die ihre Stellung in dem Verteilerrohrhalter 595 beibehalten. Wenn der Primärverteiler 40 abgesenkt wird, kann er für die Reinigung oder den Ersatz aus dem Verteilertragrahmen 620 herausgezogen werden. Wenn der Primärverteiler 40 in seine eingerückte Stellung angehoben wird, werden die Verteilerdüsendichtungen 590 von den Schlitzen 580 der Verteilerdüsen 465 geführt, um eine im wesentlichen luftdichte Verbindung von dem Primärverteiler 40 zu den stromaufwärts und stromabwärts folgenden Verteilerleitungen 320 zu bilden. In der Zweifachabgabebauweise sind die obere und untere Reihe der Öffnungen 592 in dem Verteilerrohrhalter 595 zueinander versetzt, so daß es einem passenden Versatz der Schlitze 580 der Verteilerdüsen 465 entspricht. Dieser Versatz erlaubt es der oberen Reihe der konisch verlaufenden Schlitze 580 nur in Eingriff oder Kontakt mit der oberen Reihe der Verteilerdüsendichtungen 590 und der unteren Reihe der konisch verlaufenden Schlitze 580 nur in Eingriff oder Kontakt mit der unteren Reihe von Verteilerdüsendichtungen 590 zu gelangen, wenn der Primärverteiler 40 in seine eingerückte Stellung angehoben wird.

Im weiteren wird die Funktion eines erfindungsgemäß ausgestatteten pneumatischen Sägerätes mehr im Detail beschrieben.

Während des Betriebs des Meßsystems 30 wird Ausbringgut durch den Ausbringguteinlaß 80 aus dem Tank 20 in die Ausbringguttrennkammer 115 in dem Meßgehäuse 60 abgezogen, und zwar aufgrund der Schwerkraft und des Niedrigdruckluftstroms durch die Venturianschlüsse 445. Während sich das Ausbringgut in der Ausbringguttrennkammer 115 befindet, wird es von den Rührstiften 260 der Rührwerkswelle 255, die in der Ausbringguttrennkammer 115 in dem Ausbringgut dreht, davon abgehalten, zusammenzukleben.

Wenn sich eines der drehbaren Absperrventile 265 in seiner geschlossenen Stellung befindet, wird Ausbringgut, das das Absperrventil 265 beaufschlagt, davon abgehalten, in die Meßkammer 125 zu gelangen und wird statt dessen zu der Ausbringguträumkammer 120 geleitet. Aus diesem Grund wird den Meßrädern 145 und den Zweigen, die von dem Absperrventil 265 bedient werden, Ausbringgut verwehrt, und im wesentlichen wird kein Ausbringgut von dem Tank 20 zur Aussaat durch die abgeklemmten Zweige abgegeben. Wenn sich beide Absperrventile 265 des Ausbringguttrenners 65 in ihrer geschlossenen Stellung befinden, kann im wesentlichen kein Ausbringgut in die Meßkammer 125 gelangen, und im wesentlichen wird kein Ausbringgut aus dem Tank 20 zur Aussaat abgegeben. Statt dessen wird das Ausbringgut in die Ausbringguträumkammer 120 abgezweigt, und eine Bedienungsperson kann die Reinigungstür 105 öffnen, um den Tank 20 zu leeren, ohne daß Ausbringgut in den verbleibenden Teil des Meßsystems 30 gelangt.

Wenn beide Absperrventile 265 ihre geöffnete Stellung einnehmen, kann Ausbringgut in die Meßkammer 125 gelangen und durch den Kammereinlaß 175 in den Meßeinsatz 70 eintreten. Die Drehgeschwindigkeit der Meßräder 145 kann verändert werden, um die gewünschte Zumeßrate zu erreichen. Durch eine Einstellung an den Übersetzungsgetrieben 220, um das Maß der Drehung der Querwelle 225 in bezug auf die Hauptantriebswelle 215 zu ändern, können die Meßräder 145 in den Meßsystemen 30 für getrennte Tanks 20 mit unterschiedlicher Geschwindigkeit angetrieben werden. Wenn sich die Meßräder 145 drehen, fördern sie in ihren Ausbringgutaufnahmetälern 280 Ausbringgut zu dem Kammerauslaß 180, wo das Ausbringgut an dem Primärverteiler 40 in einen Luftstrom gezogen wird. Das Ausbringgut wird von den Meßradbürsten 160 und den Verschleißeinsätzen 155 davon abgehalten, durch das Gehäuse 135 nach oben zu strömen.

Währenddessen wird das Zentrifugalgebläse 390 von dem Hydrauliksystem des Ackerschleppers angetrieben, das Druckluft durch das pneumatische Verteilersystem 35 drückt. Luft bewegt sich von dem Zentrifugalgebläse 390 zu der Luftkammer 400, wo sie von der Klappe 415 in die vielen Auslaßanschlüsse 420 aufgeteilt wird. Die Verteilerleitungen 320 bringen die Luft zu dem Primärverteiler 40.

Wenn Ausbringgut aus dem Tank 20 oberhalb des Primärverteilers 40 in die obere Reihe der Auslaßanschlüsse 420 abgegeben werden soll, werden die Venturianschlüsse 445 dazu benutzt, die obere Reihe von Anschlüssen in dem Primärverteiler 40 zu bilden und zwar mit den Venturidruckplatten 450 an den Seiten der oberen Reihe. Das Ausbringgut wird an dem Ausbringguteinlaß 515 in den Primärverteiler 40 dosiert abgegeben. Ein Teil der Druckluft des Verteilersystems 35 wird mittels einer in Figur 15 gezeigten und in den äußeren Verteilerdüsen 465 vorgesehenen Mündung 675 für den Druck in dem Tank 20 unmittelbar vor dem Venturielement 525 der oberen Reihe von Anschlüssen in die Venturidruckplatten 450 am Ende der oberen Reihe gebracht, wobei es sich bei den Verteilerdüsen 465 um jene handelt, die nahe der Venturidruckplatten 450 gelegen sind. Die Luft tritt an der Mündung 550 in die Venturidruckplatten 450 ein und wird zu der Mündung 555 geführt, wo sie in das Meßgehäuse 60 gelangt. Die Luft wird dann durch den Luftdurchlaß 605 des Meßgehäuses 60 in die hohlen Schenkel 610 der Leiter 615 geführt, die sich oberhalb des Meßgehäuses 60 befindet. Schließlich gelangt die Luft zu der höchsten Stelle der Leiter 615, wo sie in den Tank 20 abgegeben wird.

Wenn das Ausbringgut von dem Tank 20 oberhalb des Primärverteilers 40 in eine untere Reihe von Anschlüssen abgegeben werden soll, werden die Nebenanschlüsse 455 dazu benutzt, die obere Reihe von Anschlüssen in dem Primärverteiler 40 zu bilden, und zwar mit Übertragungsdruckplatten 460 an den Seiten der oberen Reihe. Ausbringgut wird an den Nebeneinlässen 490 der Nebenanschlüsse 455 in den Primärverteiler 40 abgegeben, wo es unter den Ausbringgutdurchgängen 485 aufgeteilt wird und durch die Nebenauslässe 495 in die Ausbringguteinlässe 515 der Venturianschlüsse 445 der unteren Reihe fällt. Ein Teil der Luft des Verteilersystems 35 wird von der Mündung 675 in den äußersten Verteilerdüsen 465 in der unteren Reihe aufgenommen. Die Luft wird zu der Venturidruckplatte 450 an dem Ende der unteren Reihe gebracht. Die Luft tritt an der düsenseitigen Mündung 550 in die Venturidruckplatte 450 ein und tritt an der zumeßseitigen Mündung 555 wieder aus, wo sie in die Übertragungsdruckplatte 460 geleitet wird, wobei sie an der Übertragungsmündung 565 ein- und an der Übertragungsmündung 570 austritt. Luft gelangt von der oberen Übertragungsmündung 570 in das Meßgehäuse 60 und setzt sich durch den Luftdurchlaß 605 und die Schenkel 610 der Leiter 615 in den Tank 20 fort.

Luft und Ausbringgut fließen in dem Verteilersystem 35 von dem Primärverteiler 40 durch die Verteilerleitungen 320 zu den Anstiegsrohren 405, die die wahlweise Verteilung des Ausbringguts der Sekündärverteiler 325 übernehmen, die unmittelbar stromabwärts folgen. Die Sekundärverteiler 325 verteilen das Ausbringgut im wesentlichen gleichmäßig in eine Vielzahl von Verteilerleitungen 323, die zu den Säscharen 410 auf den Bodenöffnern 50 führen, wo das Ausbringgut zur Aussaat gebracht wird.

Um die Ablage von Ausbringgut in dem Boden zu ändern, ohne die stromabwärts folgenden Verteilerleitungen 323 neu anzuordnen, kann die Bedienungsperson den Ausbringguttrenner 65 in seine geschlossene Stellung bringen, so daß kein Ausbringgut abgemessen wird. Die Bedienungsperson kann dann die Primärverteiler 40 austauschen, so daß Ausbringgut aus einem speziellen Tank 20 an einer anderen Reihe von Venturianschlüssen 445 oder Nebenanschlüssen 455 des Primärverteilers 40 eintritt und von den Verteilerleitungen 323 für die Ablage an einer anderen Stelle geführt wird. Zum Beispiel kann dann, wenn Ausbringgut mit einem größeren Korn zugemessen werden muß, eine Bedienungsperson den Meßeinsatz 70 entfernen und durch einen getrennten Meßeinsatz 70 mit Meßrädern 145 ersetzen, die größere Ausbringgutaufnahmetäler 280 besitzen. Wenn statt dessen eine Bedienungsperson von einem Betrieb, in dem mehr Dünger als Ausbringgut erforderlich ist, zu einem Betrieb wechseln möchte, in dem mehr Ausbringgut als Dünger erforderlich ist, und ein Tank 20 größer ist als der andere, kann sie die Anzahl des Anhaltens zum Nachfüllen der Tanks 20 dadurch reduzieren, daß sie den Primärverteiler 40 unterhalb der Tanks 20 entfernt und austauscht, um die Lage der Venturianschlüsse 445 und Nebenanschlüsse 455 umzukehren. Dieser Austausch resultiert darin, daß Ausbringgut und Dünger an derselben Stelle wie bisher abgelegt werden, ohne daß die Verteilerleitungen 320 hätten neu geordnet werden müssen.

Wenn jedoch die Bedienungsperson vorhat, die Ausbringbreite zu ändern, oder wenn sich die Aufmachung des Bodenbearbeitungsgeräts 10 geändert hat, kann sie einen oder mehrere Zweige dadurch schließen, daß sie Kappen 440 auf eine Spalte der Auslaßanschlüsse 420 aufsetzt, den Türeinsatz 165 in den Kammereinlaß 175 einsetzt, um den Kammerabschnitt 140 abzuschneiden, der dem Zweig zugeordnet ist, und den Deckel 470 auf den Ausbringguteinlaß 515 des Venturianschlusses 445 oder über den Nebeneinlaß 490 des Nebenanschlusses 455 aufsetzt, abhängig davon, welcher sich in dem Primärverteiler 40 in der oberen Reihe der Anschlüsse befindet. Wenn die Anzahl der von dem Meßsystem 30 und dem Verteilersystem 35 bedienten Säschare 410 reduziert wurde, aber immer noch dieselbe Anzahl von Zweigen benötigt wird, kann die Bedienungsperson einen oder mehrere der Meßeinsätze 70 entfernen und durch Meßeinsätze ersetzen, die für den Aufbau des Bodenbearbeitungsgeräts 10 vorbereitet sind, oder sie kann die Meßeinsätze 70 dadurch neu konfigurieren, daß sie Blindglieder 330 auf eines oder mehrere Meßräder 145 aufsetzt, um die Kapazität in jedem Zweig zu reduzieren.

Vorzugsweise ist das pneumatische Sägerät mit einer Plattform 680 ausgerüstet - sh. Figur 2 -, auf der die Bedienungsperson stehen kann, wenn das Ausbringgut in die Tanks 20 gefüllt wird oder die Tanks 20 geprüft werden.

Es kann auch ein elektronischer Ausbringgutrechner von bekannter nicht gezeigter Bauart eingebaut werden, der die Bedienungsperson warnt, wenn eines der Säschare 410 verstopft ist oder wenn der Füllstand des Ausbringguts in einem der Tanks 20 niedrig ist, und der die Größe der bearbeiteten Fläche errechnet. Ein in Figur 3 gezeigtes Beobachtungsrad 196 kann hilfreich sein, die Anzahl der Umdrehungen der Meßräder 145 in einer der Meßsysteme 30 zu beobachten.

Desweiteren kann eine Schnecke 685 bekannter Bauart - sh. Figur 1 - an den Ausbringgutwagen 5 angebracht werden, mit der Ausbringgut in die Tanks 20 gefördert und unbenutztes Ausbringgut aus den Tanks 20 entfernt werden kann.

Obwohl die Erfindung nach dem bevorzugten Ausführungsbeispiel in der Zwischen-Bauweise beschrieben worden ist, bei der der Ausbringgutwagen 5 zwischen dem Bodenbearbeitungsgerät 10 und dem Ackerschlepper angeordnet ist, kann sie gemäß Figur 19 auch in einer nachgezogenen Bauweise ausgebildet werden, so daß der Ausbringgutwagen 5 hinter dem Bodenbearbeitungsgerät 10 gezogen wird. Das pneumatische Sägerät in der nachgezogenen Bauweise enthält zusätzliche Nachlaufräder 690 an dem vorderen Ende des Ausbringgutwagens 5, um die Last abzustützen, die in der Zwischenbauweise mittels der Deichsel des Ausbringgutwagens 5 auf den Ackerschlepper übertragen wird. Die Funktion des pneumatischen Sägeräts in der nachgezogenen Bauweise ist im wesentlichen dieselbe wie die in der Zwischen-Bauweise; allerdings sind die Komponenten umgekehrt, so daß das Verteilersystem 35' Luft und Ausbringgut von hinten auf dem Ausbringgutwagen 5' nach vorne liefert, so daß das Ausbringgut zu den Säscharen 410 auf dem Bodenbearbeitungsgerät 10 vor dem Ausbringgutwagen 5 gelangt.

## Patentansprüche

1. Sägerät mit wenigstens einem Tank (20), wenigstens einem in einem Meßgehäuse (60) angeordneten Meßsystem (30) und wenigstens einem pneumatischen Verteilersystem (35), wobei eine strömungsverbindung einerseits an das Verteilersystem (35) angeschlossen ist und andererseits in den Tank (20) mündet, **dadurch gekennzeichnet, daß** die Strömungsverbindung einen im Meßgehäuse (60) angeordneten Luftdurchlaß (605) umfasst.

2. Sägerät nach Anspruch 1, **dadurch gekennzeichnet, daß** in dem Primärverteiler (40) wenigstens ein Venturianschluß (445) mit einem Venturielement (525) zur Aufnahme von Ausbringgut vorgesehen ist, durch den ein Luftstrom geführt wird, und daß eine Venturidruckplatte (450) vorgesehen ist, die einen Teil des Luftstroms abzweigt und dem Tank (20) zuführt.

3. Sägerät nach Anspruch 2, **dadurch gekennzeichnet, daß** der Luftdurchlaß (605) einerseits an den Tank (20) und andererseits an das Verteilersystem (35) oder die Venturidruckplatte (450) angeschlossen ist.

4. Sägerät nach einem oder mehreren der vorherigen Ansprüche, **dadurch gekennzeichnet, daß** das Meßsystem (30) wenigstens ein drehbares Meßrad (145) aufweist, das in einem austauschbaren Meßeinsatz (70) drehbar aufgenommen ist.

5. Sägerät nach einem oder mehreren der vorherigen Ansprüche, **gekennzeichnet durch** eine Leiter (615) in dem Tank (20), deren wenigstens einer Schenkel (610) hohl ausgebildet und einerseits an das Verteilersystem (35) oder die Venturidruckplatte (450) angeschlossen ist und sich andererseits in den Tank (20) öffnet.

6. Sägerät nach einem oder mehreren der vorherigen Ansprüche, **dadurch gekennzeichnet, daß** die Abzweigung der Luft in dem Venturianschluß (445) stromaufwärts eines Venturielements (525) erfolgt.

7. Sägerät nach einem oder mehreren der vorherigen Ansprüche, **dadurch gekennzeichnet, daß** die Venturidruckplatte (450) eingangsseitig und ausgangsseitig jeweils wenigstens eine Mündung (550, 555) zur Aufnahme und Führung der aus dem Luftstrom abgezweigten Luft aufweist.

8. Sägerät nach einem oder mehreren der vorherigen Ansprüche, **dadurch gekennzeichnet, daß** eine Übertragungsdruckplatte (460) mit wenigstens einer eingangs- und einer ausgangsseitigen Mündung (565) und (570) vorgesehen ist, die zur Herstellung einer Strömungsverbindung zwischen jeweils einer ausgangsseitigen Mündung (555) der Venturidruckplatte (450) und dem Tank (20) bestimmt ist.

## Claims

1. A seeder with at least one tank (20), at least one metering system (30) arranged in a metering housing (60) and at least one pneumatic distributer system (35), wherein a flow connection is connected at one end to the distributer system (35) and at the other end opens into the tank (20), **characterized in that** the flow connection (60) comprises an air passage (605) disposed in the metering housing (60).

2. A seeder according to claim 1, **characterized in that** at least one Venturi port (445) with a Venturi element (525) is provided in the primary distributor (40) for reception of product, through which an airstream is passed, and **in that** a Venturi pressure plate (450) is provided, which branches off part of the airstream and feeds it to the tank (20).

3. A seeder according to claim 2, **characterized in that** the air passage (605) is connected at one end to the tank (20) and at the other end to the distributor system (35) or the Venturi pressure plate (450).

4. A seeder according to one or more of the preceding claims, **characterized in that** the metering system (30) comprises at least one rotatable metering wheel (145) which is received rotatably in an interchangeable metering cartridge (70).

5. A seeder according to one or more of the preceding claims, **characterized by** a ladder (615) in the tank (20) with at least one of its sides (610) of hollow form and connected at one end to the distributor system (35) or the Venturi pressure plate (450) and opening at the other end into the tank (20).

6. A seeder according to one or more of the preceding claims, **characterized in that** the branching off of the air in the Venturi port (445) is effected upstream of a Venturi element (525).

7. A seeder according to one or more of the preceding claims, **characterized in that** the Venturi pressure plate (450) has at least one orifice (550, 555) on each of the input side and the output side for reception OF and guiding the air branched off from the airstream.

8. A seeder according to one or more of the preceding claims, **characterized in that** a transfer pressure plate (460) is provided, with at least one input side and one output side orifice (565) and (570), adapted to produce a flow connection between an output side orifice (555) of the Venturi pressure plate (450) and the tank (20) respectively.

## Revendications

1. Semoir comprenant au moins une trémie (20), au moins un système de dosage (30) agencé dans un carter (60) et au moins un système de distribution (35) pneumatique, sachant qu'une liaison pour écoulement est raccordée, d'une part, au système de distribution (35) et débouche, d'autre part, dans la trémie (20), **caractérisé en ce que** la liaison pour écoulement comporte un passage d'air (605) agencé dans le carter de dosage (60).

2. Semoir selon la revendication 1, **caractérisé en ce qu'**il est prévu de poser dans le distributeur primaire (40) au moins un venturi (445) avec un élément de rétrécissement (525), destiné à recevoir les matières à répandre et à travers lequel est guidé un flux d'air, et **en ce qu'**il est prévu une plaque de pression des venturis (450), qui fait dévier une partie du flux d'air et l'achemine vers la trémie (20).

3. Semoir selon la revendication 2, **caractérisé en ce que** le passage d'air (605) est raccordé, d'une part, à la trémie (20) et, d'autre part, au système de distribution (35) ou à la plaque de pression des venturis (450).

4. Semoir selon une ou plusieurs des revendications précédentes, **caractérisé en ce que** le système de dosage (30) comporte au moins une roue de dosage (145) rotative, qui est logée de manière rotative dans un élément doseur (70) encastrable amovible.

5. Semoir selon une ou plusieurs des revendications précédentes, **caractérisé par** une échelle (615) posée à l'intérieur de la trémie (20), dont au moins un montant (610) est creux et est raccordé, d'une part, au système de distribution (35) ou à la plaque de pression des venturis (450) et s'ouvre, d'autre part, dans la trémie (20).

6. Semoir selon une ou plusieurs des revendications précédentes, **caractérisé en ce que** la déviation de l'air dans le venturi (445) est effectuée en amont d'un élément de rétrécissement (525).

7. Semoir selon une ou plusieurs des revendications précédentes, **caractérisé en ce que** la plaque de pression des venturis (450) comporte respectivement sur le côté d'admission et sur le côté de sortie au moins une embouchure (550, 555) pour recevoir et guider l'air dévié hors du flux d'air.

8. Semoir selon une ou plusieurs des revendications précédentes, **caractérisé en ce qu'**il est prévu une plaque de pression de transmission (460) munie d'au moins une embouchure (565) sur le côté d'amission et d'une embouchure (570) sur le côté de sortie, qui est destinée à créer une liaison d'écoulement entre chaque embouchure (555) sur le côté d'admission de la plaque de pression des venturis (450) et la trémie (20).
